# EUROPÄISCHE PATENTSCHRIFT

(11) **EP 3 854 938 B1**
(45) Veröffentlichungstag und Bekanntmachung des Hinweises auf die Patenterteilung: **25.06.2025**
(21) Anmeldenummer: 21158245.7
(22) Anmeldetag: 15.01.2019
(51) Int. Cl.: D21H 27/10, D21H 27/30, D21H 27/40, D21H 11/12, D21H 11/14

(54) **MEHRLAGIGES ALTPAPIER- UND GRASFASERN ENTHALTENDES PAPIER**
MULTI-LAYER PAPER CONTAINING RECYCLED PAPER AND GRASS FIBRES
PAPIER MULTICOUCHE CONTENANT DES VIEUX PAPIERS ET DES FIBRES DE GAZON

(43) Veröffentlichungstag der Anmeldung: 28.07.2021
(62) Teilanmeldung aus: 19151777.0
(73) Patentinhaber: Certina Production AG, 82031 Grünwald (DE); Wehrmann, Hans, 82031 Grünwald (DE)
(72) Erfinder: Wehrmann, Dr. Hans, 82031 Grünwald (DE); Pflug, Martin, 25489 Haselau (DE)
(74) Vertreter: Raffay & Fleck

(56) Entgegenhaltungen:
- EP-A1- 2 224 059
- WO-A1-2016/123701
- WO-A1-2018/229333
- DE-U1- 202012 002 588
- DE-U1- 202018 104 195
- US-A- 4 726 863
- US-A1- 2009 197 089
- US-A1- 2014 093 705

## Beschreibung

Die Erfindung betrifft ein mehrlagiges, insbesondere zweilagiges Papier, insbesondere für die Verwendung zur Herstellung von Wellkarton, gemäß dem Oberbegriff des Anspruchs 1. Die Erfindung betrifft ferner ein Verfahren zum Herstellen eines solchen Papiers.

In der Papierherstellung werden seit langem zwei unterschiedliche Arten von Fasern verwendet, um daraus eine Faserstoffzusammensetzung, die sogenannte Pulpe, herzustellen, die dann in einer dünnen Schicht auf ein Sieb ausgebracht und nachfolgend entwässert, von dem Sieb als Bahn abgelöst und zu dem fertigen Papier weiter entwässert und endgetrocknet wird. Diese Fasern sind einmal sogenannte Frischfasern, die aus frischem Zellstoff, typischerweise Holzabschnitten bzw. Holzschnitzeln gewonnen und soweit aufgebrochen werden, dass sie Fibrillen bilden, mit denen sie später in dem Papier eine feste Verbindung untereinander eingehen. Weiterhin werden zu Papierherstellung auch Altpapierfasern, also solche Fasern verwendet, die aus aus dem Recyclingkreislauf zurück gewonnenem Papier, dem Altpapier, gewonnen werden. Die Verwendung von Altpapierfasern ist, da sie einen zweiten Zyklus oder sogar mehrere weitere Zyklen des Fasermaterials ermöglicht, unter Umweltgesichtspunkten vorteilhaft. Einerseits kann das Altpapier als wertvoller Rohstoff wiederverwertet werden, andererseits werden für die Papierherstellung weniger Frischfasern benötigt, sodass hierfür der Natur weniger Holz entnommen werden muss.

Problematisch bei Altpapierfasern ist jedoch, dass diese gegenüber den Frischfasern in der Regel kleinteiliger sind und deshalb, insbesondere wenn sie bereits mehrfach den Recyclingprozess durchlaufen haben, eine schlechtere Bindung innerhalb des Papiers ergeben, damit eine geringere Reißfestigkeit des Papiers.

Daher wurden früher vielfach Altpapierfasern mit Frischfasern vermengt, um so einerseits das Altpapier wieder zu verwenden, andererseits eine ausreichende Reißfestigkeit des erzeugten Papiermaterials zu erhalten.

Heutzutage wird das anfallende Altpapier sehr dezidiert in unterschiedliche Qualitäten sortiert. So wird zum Beispiel unterschieden zwischen:
- recyceltem, zuvor aus Frischfasern hergestelltem Kraftkarton oder Kraftpapier, welches besonders lange Zellstofffasern enthält,
- herkömmlichem Papier oder Karton, das bzw. der aus gewerblichen Abfällen stammt,
- unbedrucktem weißen Papier (zum Beispiel aus Druckereien oder Buchbinderereien stammende Abschnitte von unbedrucktem Papier aus dem Buchdruck),
- nur mit wenig Druckfarbe bedruckten Abschnitten weißen Papiers und
- gemischtem Altpapier aus Haus- oder Gewerbeabfällen.

Dieser Umstand hat insbesondere dazu geführt, dass heutzutage auch aus reinem Altpapier Papier hergestellt werden kann, das in seinen Eigenschaften nicht nur die an dieses gestellten Ansprüche erfüllt, zum Beispiel in Bezug auf die Reißfestigkeit, sondern das technologisch auch soweit beherrschbar einstellbar ist, dass unterschiedliche Qualitäten mit besonderen Eigenschaften hergestellt werden können. Aus reinem Altpapier hergestelltes Papier wird zum Beispiel verwendet, um daraus später in einem Wellpappenwerk Wellpappe, herzustellen.

Bekannt ist es auch, Papier, auch solches, das ohne Einsatz von Frischfasern, insbesondere zu 100 % aus Altpapier, hergestellt wird, mehrlagig, bspw. zweilagig, zu produzieren mit zwei oder mehr miteinander vergautschten Papierlagen unterschiedlicher Zusammensetzung und Eigenschaften. Zum Beispiel kann eine Sichtschicht, bzw. Deckschicht aus weißem Altpapier hergestellt sein, um eine für ein späteres Bedrucken dieser Schicht optisch ansehnliche und geeignete Schicht zu ergeben, kann eine rückwärtige Schicht, auf der die Sichtschicht, bzw. Deckschicht, ggf. unter Zwischenanordnung einer Zwischenschicht oder mehrerer Zwischenschichten, aufgebracht ist, aus einfachem braunen Altpapier bestehen, welches keine hohen optischen Anforderungen erfüllen muss. Dies ist zum Beispiel günstig, da weißes Altpapier ein verglichen mit braunem Altpapier hochpreisiger Rohstoff ist, dessen Verbrauch bei einer mehrlagigen, insbesondere zweilagigen Herstellung des Papiers reduziert wird. Eine Zwischenschicht (oder auch mehrere Zwischenschichten) kann (können) dabei insbesondere vorgesehen werden, um ein Durscheinen der rückwärtigen Schicht durch die Deckschicht zu verhindern.

Grundsätzlich ist es weiterhin bekannt, neben Altpapier und Frischfasern auch Grasfasern in der Papierherstellung mit einzusetzen, in der Regel als Beigabe zu Frischfasern und/oder Altpapierfasern. Ein Beispiel für einen Druckträger, der Gasfasern, Frischfasern und Altpapierfasern bestehen kann, ist in der DE 20 2018 104 195 U1 offenbart.

Grasfasern sind dabei Fasern, die durch eine entsprechende Aufbereitung aus getrocknetem, halbgetrocknetem oder frischem Süß- und/oder Sauergras und/oder Seegras und/oder Algen gewonnen werden. Da diese Fasern verglichen mit Frischfasern oder Altpapierfasern deutlich kürzer sind und deutlich weniger fest in einer Papierlage miteinander Verbindungen eingehen, ist die Herstellung von Papier aus 100 % derartigen Fasern, jedenfalls bisher, nicht möglich. Grasfasern werden aber, wie bereits erwähnt, den Faserzusammensetzungen in der Papierherstellung beigegeben. Verglichen mit Frischfasern haben Grasfasern zwei Vorteile: Sie sind einerseits kostengünstiger als die Frischfasern. Nach derzeitigem Preisgefüge liegt der Preis für 1 t Frischfasern bei etwa 800 bis 1000 € im Vergleich zu einem Preis für 1 t Grasfasern von etwa 300-400 €. Desweiteren sind Grasfasern umweltfreundlicher als Frischfasern, da sie aus einem deutlich schneller nachwachsenden Rohstoff gewonnen werden können. Verglichen mit Altpapierfasern reduziert sich der Vorteil allein auf die Umweltfreundlichkeit. Hier sind die Grasfasern den Altpapierfasern deshalb in der Umweltfreudigkeit überlegen, da Altpapierfasern häufig mit Druckfarbenresten behaftet sind, und somit in den Papierherstellungsprozess Chemikalien, oftmals auf mineralölbasierende Chemikalien, aus dem Druckvorgang einbringen, die den Prozess, insbesondere das Abwasser, belasten. Ein Preisvorteil ergibt sich indes nicht, da nach aktuellem Preisgefüge Altpapier noch einmal deutlich günstiger zu haben ist als Grasfasern (der aktuell durchschnittliche Preis für 1 t Altpapier liegt bei etwa 80-140 €).

Papier mit beigemengten Grasfasern wird aufgrund insbesondere der Umweltfreundlichkeit aktuell stark nachgefragt, so z.B. von der Verpackungsindustrie, wo aus mit Grasfasern versehenem Papier, sogenanntem Graspapier, hergestellte Verpackungen insbesondere auch im Bereich der Sekundärverpackung von Bio-Lebensmitteln eingesetzt werden. Durch diese Art von Papier, welches aufgrund der beigemengten Grasfasern auf einer Sichtseite eine grünliche Optik hat, teilweise die einzelnen Grasfasern als Partikel noch erkennen lässt, erkennt der Kunde die aus diesem Papier gefertigte Verpackung als umweltgerecht und nachhaltig, sodass das Gesamtkonzept aus umweltverträglich hergestelltem Lebensmittel und einer umweltgerecht und nachhaltig hergestellten Verpackung stimmig ist. Dies gilt insbesondere dann, wenn zudem die eigentliche Trägerfaser des Papiers keine Frischfasern, sondern eine den Recyclinggedanken stützende Altpapierfasern ist.

Von Seiten der Anwender des Graspapiers, insbesondere aus der Verpackungsindustrie, gelangen insoweit immer wieder Forderungen an die Papierhersteller, den Anteil an Grasfasern in, insbesondere ansonsten auf Basis von Altpapierfasern hergestelltem, Papier zu erhöhen und/oder dabei zudem optisch ansprechende, gut bedruckbare und den Charakter eines Graspapiers deutlich zu erkennen gebende Sichtflächen mit einem hohen Grasanteil zu schaffen.

Gerade im Bereich der Herstellung von Papier basierend auf Altpapierfasern ist jedoch eine Beimengungen von Grasfasern nur begrenzt möglich, da bereits die Altpapierfasern verglichen mit Frischfasern geringere Faserlängen und Fibrillendichte aufweisen und somit an sich schon ein im Hinblick auf die Reißfestigkeit weniger belastbares Papier ergeben, sodass die Zugabe von die Reißfestigkeit noch weiter verringernden Grasfasern in der Menge beschränkt ist.

Hier nun einen Ansatz zu finden und den Anteil an Grasfasern in einem auf Altpapierfasern basierten Papier zu erhöhen, bzw. bei einem Papier mit Grasanteil eine eine deutliche Graspapieroptik aufzeigende Sichtfläche ausbilden zu können, haben sich die Erfinder zur Aufgabe gemacht.

Erfindungsgemäß wird diese Aufgabe gelöst durch ein Papier, insbesondere für die Verwendung zur Herstellung von Wellpappe, wobei das Papier aus wenigstens zwei miteinander vergautschten Lagen mit unterschiedlicher Zusammensetzung gebildet ist und wobei das Papier Altpapierfasern und Grasfasern enthält, vorzugsweise ausschließlich diese beiden Fasertypen aufweist, und wobei die Grasfasern Fasern von Süß- und/oder Sauergras und/oder Seegras und/oder Algen sind und wobei sich das Papier dadurch auszeichnet, dass eine erste Lage des Papiers als Tragschicht ausgebildet ist und einen Mindestanteil an Altpapierfasern von 70 Gew.-% sowie einen maximalen Anteil an Grasfasern von ca.30 Gew.-% oder keine Grasfasern enthält und dass eine zweite Lage des Papiers eine Deckschicht ausbildet mit einem Anteil an Grasfasern von mindestens 20 Gew.-% und einem Anteil an Altpapierfasern von maximal 80 Gew.-%. Weiterhin ist in dem erfindungsgemäßen Papier der Anteil an Grasfasern in der Deckschicht höher, insbesondere deutlich höher, als der Anteil an Grasfasern in der Tragschicht. Insbesondere kann der Anteil an Grasfasern in der Deckschicht um wenigstens 5 Gew.-%, vorzugsweise um wenigstens 10 Gew.-%, insbesondere um wenigstens 15 Gew.-% höher liegen als der Anteil an Grasfasern in der Tragschicht, die im Rahmen der Erfindung insbesondere auch vollkommen ohne Beimengung von Grasfasern hergestellt sein kann.

Es wird hier also bewusst ein wenigstens zweilagiges System geschaffen, bei dem eine erste der Lagen eine Tragschicht bildet, die also für die Stabilität und für wesentliche technologische Eigenschaften, wie insbesondere die Reißfestigkeit, Sorge trägt und bei dem eine zweite der Lagen eine Deckschicht ausbildet, die mit einem entsprechend erhöhten Anteil an Grasfasern gebildet werden kann, da sie selbst keine das System tragende Stabilität ausbilden muss, sondern von der Tragschicht getragen wird. Diese Deckschicht kann somit einerseits zu einer Erhöhung des Gesamtanteils an Grasfasern in dem System beitragen verglichen mit dem geringeren Anteil an Grasfasern in der Tragschicht. Sie kann andererseits, insbesondere auch zusätzlich, eine optisch ansprechende und die Graspapieroptik besonders hervorbringende Sichtseite des Papiers ausbilden.

Es hat sich dabei insbesondere überraschend herausgestellt, dass die die Deckschicht bildende Lage mit dem hohen Grasfaseranteil nicht nur in einer Papiermaschine stabil gehalten werden kann bis zum Vergautschen mit der die Tragschicht ausbildenden Lage, sondern auch, dass diese Lage mit dem hohen Anteil an Grasfasern gleichwohl durch das Vergautschen ausreichend fest mit der die Tragschicht bildenden Lage verbunden werden kann, so dass sich für die weitere Verarbeitung und den Gebrauch des Papiers handhabbare Spaltfestigkeiten erzielen lassen. Im Rahmen der Erfindung kann das Papier auch mehr als zwei Lagen enthalten, kann oder können zwischen der Tragschicht und der Deckschicht z.B. eine oder mehrere Zwischenlage(n) vorgesehen sein. In diesem Fall ist das Vergautschen der Deckschicht mit der Tragschicht insgesamt als ein Vergautschen der Decksicht mit der oder den Zwischenlage(n), ein Vergautschen der Zwischenlagen miteinander und ein Vergautschen der der Tragschicht zugewandten Zwischenlage mit der Tragschicht zu verstehen. Wenn Zwischenlagen zum Einsatz kommen, so können auch diese Grasfasern enthalten und vorzugsweise wenigstens überwiegend auf aus Altpapier gewonnenen Fasern basieren, allenfalls einen geringen, vorzugsweise keinen, Anteil an Frischfasern aufweisen.

Wenn vorstehend und auch nachfolgend ein Anteil an dem Papier in Gew.-% angegeben wird, so versteht sich dieser Anteil als ein Anteil gemessen auf eine Trockenmasse (nach dem Trocknen im Ofen).

Als Grasfasern werden hierbei Fasern von Süß- und/oder Sauergras und/oder Seegras und/oder Algen verwendet. Diese können aus getrocknetem, halbgetrocknetem oder frischem Material gewonnen werden. Die Grasfasern können dabei zum Beispiel wie in der EP 2 825 699 A1 beschrieben aufbereitet werden, um in der Faserstoffzusammensetzung verwendet zu werden. Allerdings ist es nicht zwingend erforderlich, dass das Grasmaterial in einem Verfahrensschritt pelletiert wird. Das Grasmaterial kann ebenso gut als loses Schüttgut eingesetzt werden. Eine Aufbereitung des Grases für die Gewinnung der Grasfasern kann weiterhin entsprechend der DE 10 2013 114 386 A1 erfolgen. Die Faserstoffzusammensetzungen, die für die Herstellung der beiden Lagen Tragschicht und Deckschicht des zwei- oder mehrlagigen Papieres angesetzt werden, können zum Beispiel den in der DE 10 2012 107 193 A1 prinzipiell beschriebenen entsprechen, wobei vorzugsweise für das erfindungsgemäße Papier keine Frischfasern oder lediglich ein geringer Anteil an Frischfasern, typischerweise max. 10 Gew.-%, insbesondere maximal 5 Gew.-%, eingesetzt werden.

Wie bereits erwähnt, bringt die Tragschicht die erforderliche Stabilität des Papiers, sodass sie nur einen begrenzten maximalen Anteil an Grasfasern aufweisen kann. Dieser kann zum Beispiel zwischen 20 Gew.-% und 30 Gew.-% liegen, aber auch darunter. So kann der maximale Anteil an Grasfasern in der Tragschicht auch weiter begrenzt werden auf z.B. 25 Gew.-% oder 20 Gew.-%. Es ist, wie schon erwähnt, auch denkbar, dass überhaupt keine Grasfasern in der Tragschicht enthalten sind oder aber nur geringe Anteile wie zum Beispiel 5 Gew.-%, 10 Gew.-% oder 15 Gew.-% oder jeweils nur maximal ein Anteil in der angegebenen Größe. Entsprechend ist der Mindestanteil an Altpapierfasern in der Tragschicht bei 70 Gew.-%, aber auch entsprechend höher, insbesondere auch als verbleibender Rest zu 100 Gew.-% jeweils entsprechend zu den vorstehend genannten Anteilen an Grasfasern, also in einer Ausgestaltung ohne Zusatz von Frischfasern. Der Anteil an Grasfasern in der Tragschicht wird in der Regel eingestellt werden nach den Anforderungen an die mechanischen Eigenschaften, insbesondere die Reißfestigkeit, des Papiers auf der einen Seite und an einen einzustellenden Gesamtanteil an Grasfasern in dem Papier auf der anderen Seite. Sofern ein kostengünstiges Papier verlangt ist, wird der Anteil an Grasfasern in der Tragschicht aktuell eher gering, vorzugsweise bei null, gewählt werden, da, wie vorstehend erwähnt, derzeit der Preis für Altpapier deutlich unter dem Preis für Grasmaterial liegt. Wenn sich hier eine Änderung oder gar Tendenzumkehr der Preise ergibt, so kann dann natürlich eine andere Priorisierung vorherrschen und ggf. unter Kostengesichtspunkten ein hoher Anteil an Grasfasern auch in der Tragschicht angestrebt werden.

Die Deckschicht soll erfindungsgemäß einen möglichst hohen, jedenfalls einen klar höheren Anteil an Grasfasern aufweisen, um den Gesamtanteil an Grasfasern in dem Papier erhöhen zu können und/oder der Deckschicht die Optik eines mit hohem Anteil an Grasfasern versetzten Graspapiers zu verleihen. Allerdings benötigt auch die Deckschicht für eine Mindestfestigkeit, insbesondere auch im Herstellungsprozess, einen Anteil an anderen Fasern, vorzugsweise Altpapierfasern. Entsprechend kann der maximale Anteil an Grasfasern, kann insbesondere der tatsächliche Anteil an Grasfasern, in einem Bereich zwischen 30 Gew.-% und 70 Gew.-% liegen. Der minimale Anteil an Grasfasern in der Deckschicht kann z.B. 25 Gew.-%, 30 Gew.-%, 35 Gew.-% oder auch 40 Gew.-% betragen, je nach Anforderung, die der spätere Anwender an das erfindungsgemäße Papier stellt. Es ist dabei beispielsweise möglich in der Deckschicht 40 Gew.-%, 50 Gew.-% oder auch 60 Gew.-% oder bis zu solchen Anteilen als maximal Anteil reichende Anteile an Grasfasern einzubinden. Der verbleibende Anteil wird vorzugsweise mit Altpapierfasern aufgefüllt.

Für eine weitere technologische Einstellung des Papiers und auch für den Erhalt unterschiedlicher Eigenschaften der die Tragschicht zeigenden Oberfläche und der die Deckschicht zeigenden Oberfläche kann insbesondere auch vorgesehen sein, dass die beiden Lagen unterschiedliche Arten von Altpapierfasern enthalten. So können zum Beispiel in der Deckschicht aus weißem Altpapier gewonnene Altpapierfasern enthalten sein, um eine gut bedruckbare Optik zu erhalten, können in der Tragschicht braune Altpapierfasern enthalten sein, die aus einem kostengünstigeren Rohmaterial gewonnen sind. Die Deckschicht kann aber, wenn eine braune Optik erwünscht ist, auch Altpapierfasern aus braunem Altpapier enthalten. Die Altpapierfasern der Tragschicht können zum Beispiel auch aus Kraftkarton oder Kraftpapier gewonnene Fasern sein, die der Tragschicht eine besonders gute Festigkeit verleihen. Bei der Wahl derartiger Altpapierfasern für die Tragschicht kann dann zum Beispiel ein besonders hoher Anteil an Grasfasern auch in der Tragschicht integriert werden.

Das erfindungsgemäße Papier kann insbesondere als Papierbahn in einer Papiermaschine hergestellt werden. Es wird, wie vorstehend bereits erwähnt, vorzugsweise als ein Papier hergestellt, welches für die Verwendung in der weiteren Fertigung von Wellpappe, eingesetzt wird. Für diesen Zweck, aber auch für andere Zwecke, kann es insbesondere ein Flächengewicht von 80g/m² bis 200 g/m² aufweisen, vorzugsweise von 125 bis 175 g/m².

Von dieser Gesamtgrammatur des Papiers, die sich in bekannter Weise in der Stärke des Papiers abbildet, entfällt typischerweise der größere Anteil, ja oft der wesentlich größere Anteil, auf die Tragschicht. Diese kann bei dem erfindungsgemäßen Papier insbesondere ein Flächengewicht von 60-170 g/m² aufweisen. Hierdurch wird sichergestellt, dass die Tragschicht die ausreichenden technologischen Eigenschaften des mehrlagigen, insbesondere zweilagigen, Papieres gewährleisten kann. Die Deckschicht kann bei dem erfindungsgemäßen Papier typischerweise ein Flächengewicht von 30-50 g/m² aufweisen. In einem typischen mehr-, insbesondere zweilagigen, erfindungsgemäßen Papier macht die Deckschicht etwa 1/4 bis 1/3 der Gesamtstärke des Papiers aus, trägt die Tragschicht etwa 2/3 bis 3/4 zu der Gesamtstärke des Papiers bei.

Wichtig für das erfindungsgemäße Papier ist eine feste Verbindung der vergautschten Lagen. Insoweit wird für das erfindungsgemäße Papier bevorzugt, dass dieses eine Spaltfestigkeit bestimmt nach dem International-Scott-Bond-Test nach DIN ISO 16260 von 180 bis 300 J/m² aufweist, insbesondere vom 220-300 J/m².

Um eine gute Bedruckbarkeit der Deckschicht zu erreichen, wird bevorzugt, dass das erfindungsgemäße Papier einen gemäß DIN EN ISO 535 bestimmten Cobb₆₀ Wert von maximal 40 g/m², insbesondere von weniger als 35 g/m², vorzugsweise weniger als 30 g/m² aufweist. Die Einstellung des Cobb₆₀ Wertes, der ein Maß für die Wasseraufnahme des Papiers ist, erfolgt in der in der Papierherstellung bekannten Weise durch Zugabe von Leim und/oder Stärke in die noch nasse bzw. feuchte Papierbahn vor dem typischerweise im Durchlauf über Trockenzylinder durchgeführten Trocknen. Für bestimmte Anwendungen wird eine hohe Saugfähigkeit des Papiers gefordert, also ein hoher Cobb₆₀ Wert. Dies ist bspw. für Wellenstoff, also die Papierlage, die in Wellpappe die Zwischenschicht ausbildet, gefordert. Für ein solches Papier können dann auch höhere Cobb₆₀ Werte eingestellt werden, kann insbesondere ohne jegliche Zugabe von Leim oder Stärke gearbeitet werden.Ein erfindungsgemäßes Papier kann insbesondere in einer Papiermaschine hergestellt werden. Dazu werden zunächst in einer an sich bekannten Weise in getrennten Pulpern, einem für das Material der Tragschicht und einem für das Material der Deckschicht, die eingesetzten Fasermaterialien eingebracht, hier also Altpapierfasern und Grasfasern. Die Grasfasern können, bevor diese in den Pulper gegeben werden, in der wie aus dem beschriebenen Stand der Technik bekannten Weise behandelt sein, insbesondere fibrillierend aufgemahlen. In der Papiermaschine wird dann eine erste Faserstoffzusammensetzung, die aus einem ersten der Pulper entnommen ist, die ggf. noch einmal in weiteren Separatoren, Refinern und/oder Bütten gesichtet worden ist und die Wasser, Grasfasern in einem maximalen Anteil von 30 Gew.-%, bezogen auf die Trockenmasse, sowie Altpapierfasern enthält, auf ein erstes Sieb aufgebracht. Diese Faserstoffzusammensetzung bildet eine erste Lage, die Tragschicht, aus. In dieser Faserstoffzusammensetzung ist der Anteil an Altpapierfasern insbesondere bei wenigstens 70 Gew.-%, bezogen auf die Trockenmasse.

Parallel wird bei dem Verfahren eine zweite Faserstoffzusammensetzung, die aus einem zweiten der Pulper entnommen ist, die ggf. noch einmal in weiteren Separatoren, Refinern und/oder Bütten gesichtet worden ist und die Grasfasern in einem minimalen Anteil von 20 Gew.-%, bezogen auf die Trockenmasse, in jedem Fall aber einen höheren Anteil an Grasfasern als die erste Faserstoffzusammensetzung, enthält und die Altpapierfasern in einem maximalen Anteil von unter 80 Gew.-%, bezogen auf die Trockenmasse, enthält, auf ein zweites Sieb aufgebracht. Die aus den Fasermassen auf den beiden Sieben gebildeten Bahnen werden nach gegebenenfalls erstem Entwässern zusammengebracht und zu einer zweilagigen Papierbahn vergautscht. Es kann im Rahmen der Erfindung auch vorgesehen sein, dass eine auf einem weiteren Sieb aufgebrachte Faserstoffzusammensetzung eine weitere Bahn, zum Beispiel als eine Zwischenlage, ausbildet, die nach gegebenfalls erstem Entwässern mit den beiden vorstehend beschriebenen Bahnen zusammengebracht wird. Auch können mehrere solcher weiterer Bahnen gebildet und entsprechend mit en beiden vorstehend beschriebenen Bahnen zusammengebracht werden. Die so entstandene zwei- oder mehrlagige Papierbahn wird dann weiter entwässert und schließlich getrocknet in einer in der Papierstellung bekannten Weise, insbesondere mit einer Trocknung im Durchlauf durch Trockenzylinder. Das so entstandene, bahnförmige Papier wird abschließend zu einer Rolle aufgewickelt und kann dann transportiert und für die weitere Verarbeitung genutzt werden. In entsprechender angepasster Einstellung der Gewichtsanteile in den Faserstoffzusammensetzungen kann dann ein Papier mit den vorstehend bezeichneten Gewichtsanteilen an Altpapierfasern bzw. Grasfasern erreicht werden. In dem Herstellungsverfahren wird desweiteren eine an sich bekannte Aufbereitung des Rejekts und eine Rückführung der aus dem Rejekt gewonnenen Fasern in die Zuführung der Faserstoffzusammensetzung durchgeführt.

Die Anteile an Grasfasern und/oder Altpapierfasern in den Faserstoffzusammensetzungen für die Herstellung der beiden Bahnen für die Tragschicht und die Deckschicht können entsprechend den Anforderungen und insbesondere mit den vorstehend im Rahmen der Beschreibung des erfindungsgemäßen Papiers genannten Gewichtsanteilen gewählt werden.

Ein erfindungsgemäßes, zweilagig gebildetes Papier kann zum Beispiel, wenn es in der Tragschicht 75 Gew.-% Altpapierfasern und 25 Gew.-% Grasfasern enthält und die Tragschicht bei einem Gesamtflächengewicht des Papiers von 150 g/m² einen Anteil von 110 g/m² ausmacht, die Deckschicht 40 g/m² an Flächengewicht beisteuert und einen Anteil an Grasfasern von 50 Gew.-% enthält, insgesamt über 30 Gew.-% Grasfasern enthalten und dabei weiterhin ausreichend Stabilität, insbesondere Reißfestigkeit zeigen. Hinzu kommt, dass die Deckschicht mit dem besonders hohen Anteil an Grasfasern den Zusatz dieses Materials besonders gut erkennen lässt, eine entsprechend die Eigenschaft des Papiers als Graspapier betonende Optik aufweist.

Es ist hier also erkennbar, dass mit der Erfindung ein neuartiges Papier und ein Herstellungsverfahren für ein solches angegeben wird, das in der Kombination aus Altpapierfasern und Grasfasern in der Verwendung für die Herstellung eines solchen Papiers einen hohen Anteil an Grasfasern zu verwenden ermöglicht, ohne dabei die geforderten technologischen Eigenschaften, insbesondere die Stabilität und Reißfestigkeit des Papiers, zu gefährden, und/oder bei dem die die Deckschicht aufzeigende Seite des Papiers eine den Charakter des Graspapiers besonders gut erkennen lassende Optik aufweist.

Weitere Vorteile und Merkmale der Erfindung ergeben sich aus der nachfolgenden Beschreibung und aus den dabei in Bezug genommenen Figuren. Dabei zeigen:
- Fig. 1: eine schematische Darstellung der Herstellung einer Grasfasern enthaltenden Papierbahn als Einzelbahn nach dem Stand der Technik und
- Fig. 2: eine schematische Darstellung der Herstellung einer aus einer Tragschicht und einer einen hohen Anteil an Grasfasern enthaltenden Deckschicht zusammengefügten, zweilagigen Papierbahn gemäß der Erfindung.

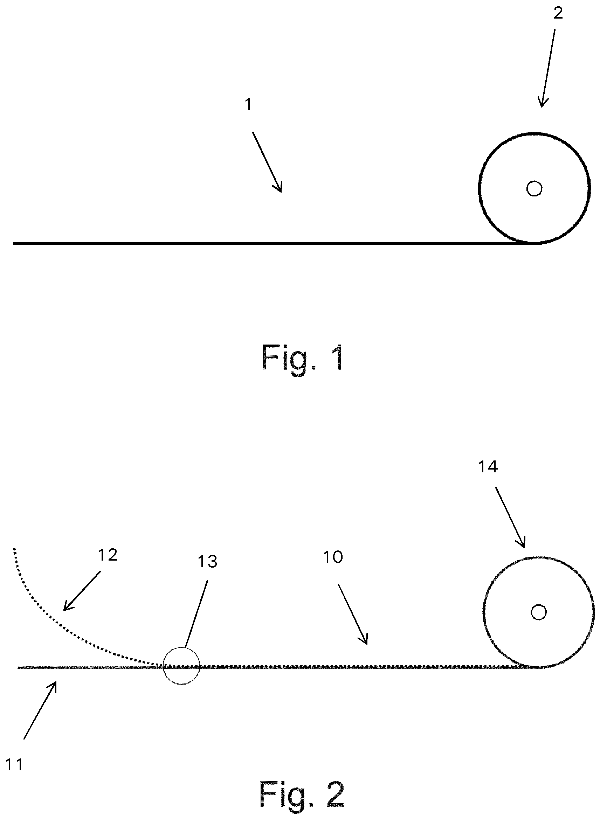

In Figur 1 ist zunächst eine herkömmliche Vorgehensweise für die Herstellung eines einlagigen Papiers in sehr schematischer Darstellung gezeigt. Eine Papierbahn 1 wird in an sich bekannter Weise in einer Papiermaschine durch Aufbringen von auf Altpapier basierender Fasermasse auf ein Sieb und erstes Entwässern sowie anschließendes Trocknen hergestellt und dann auf eine Papierrolle aufgewickelt. Dabei ist bekannt, dass dem so als Papierbahn 1 hergestellten Papier, genauer dass der Faserstoffzusammensetzung, ein Anteil an Grasfasern zugesetzt wird. Der mögliche Anteil an zugegebenen Grasfasern ist allerdings begrenzt, da Grasfasern im Vergleich zu den ohnedies nicht besonders langen Fasern des Altpapiers noch einmal kürzer sind, damit weniger Festigkeit in dem Faserverbund des Papiers bewirken können. Um die erforderliche Reißfestigkeit und sonstigen technologischen Eigenschaften des Papiers zu erhalten, ist die Beimengung von Grasfasern zu einem ansonsten auf Altpapier basierenden Faserstoffgemisch für die Papierherstellung begrenzt, typischerweise auf maximal 20 bis 30 Gew.-%.

Um den Anforderungen aus den Kreisen der Abnehmer und Anwender solchen Papiers gerecht zu werden, die insbesondere aufgrund von ökologischen Erwägungen zum einen nach einem höheren Gesamtanteil an Grasfasern im dem Papier streben und zum anderen auch eine Optik des Papiers, jedenfalls auf eine Sicht-, bzw. Deckfläche verlangen, die die im Papier enthaltenen Grasfasern, also einen "Graspapiercharakter" deutlich erkennen lassen, haben die Erfinder nun eine andere Vorgehensweise für die Herstellung eines solchen Papiers erdacht, die in Figur 2 schematisch dargestellt ist.

Dort wird eine Papierbahn 10 mehrlagig, hier zweilagig, hergestellt. Dazu wird eine erste Papierschicht, eine Tragschicht 11, durch Aufbringen einer ersten Faserstoffzusammensetzung auf ein erstes Sieb einer Papiermaschine, z.B. auf ein Untersieb, gebildet. Parallel wird eine zweite Papierschicht, eine Deckschicht 12, durch Aufbringen einer zweiten Faserstoffzusammensetzung auf ein zweites Sieb einer Papiermaschine, z.B. auf ein Obersieb, gebildet. Die Tragschicht 11 enthält dabei einen hohen Anteil an Altpapierfasern, z.B. Altpapierfasern in einem Anteil von wenigstens 70 Gew.-%, bezogen auf die Trockenmasse. Die Deckschicht 12 zeichnet sich dagegen durch einen hohen Anteil an Grasfasern aus, nämlich mindestens 20 Gew.-% in der Trockenmasse. Der Anteil an Grasfasern in der Deckschicht 12 kann insbesondere zwischen 30 und 70 Gew.-% betragen. Auch die Tragschicht 11 kann Grasfasern enthalten, wobei der Anteil an Grasfasern dort maximal 30 Gew.-% begrenzt ist, vorzugsweise auf maximal 25 Gew.-%, insbesondere maximal 20 Gew.-%, und wobei der Anteil an Grasfasern in der Deckschicht 12 in jedem Fall höher ist, insbesondere deutlich höher ist, als ein Anteil an Grasfasern in der Tragschicht 11. Bevorzugt ist der Rest der Trockenmasse in der Tragschicht 11 vollständig durch Altpapierfasern gebildet. Dort können allerdings auch - bevorzugt jedoch in nur geringem Anteil - Frischfasern enthalten sein. So wird die Tragschicht 11 ausreichend stabil gebildet, um die Reißfestigkeit und auch weitere von dem Papier der Papierbahn 10 geforderte Eigenschaften erfüllen zu können.

In der Deckschicht 12 ist der nicht durch Grasfasern gebildete Anteil an Fasern bevorzugt ebenfalls vollständig durch Altpapierfasern realisiert, wobei auch hier ein - vorzugsweise geringer - Anteil an Frischfasern enthalten sein kann. Die Deckschicht 12 ist dabei aufgrund des hohen Anteils an Grasfasern an sich nicht in einer solchen Weise ausreichend stabil und erfüllt als solche nicht die technologischen Eigenschaften, die von dem Papier in der Papierbahn 10 verlangt werden.

Durch das Zusammenführen der beiden Bahnen aus Tragschicht 11 und Deckschicht 12 an der Position 13 und durch dort vorgenommenes Vergautschen der beiden Bahnen wird dann die zweilagige Papierbahn 10 erhalten, die - vorrangig aufgrund der Eigenschaften der Tragschicht 11 - die geforderten technologischen Eigenschaften aufweist. Diese Papierbahn 10 wird, nach dem weiteren Entwässern und Trocknen, typischerweise auf einer Papierrolle 14 aufgewickelt.

Die Papierbahn 10 kann insbesondere ein Flächengewicht von 80 bis 200 g/m² aufweisen. Das Papier kann z.B. ein solches sein, dass in einer späteren Verwendung in der Herstellung von Wellpappe eingesetzt wird.

Die Tragschicht 11 kann insbesondere ein Flächengewicht von 60 bis 170 g/m² aufweisen. Die Deckschicht 12 kann insbesondere ein Flächengewicht von 30 bis 50 g/m² aufweisen. Durch eine Einstellung des Verhältnisses der Stärken, also Flächengewichte, der Tragschicht 11 und der Deckschicht 12 kann eine Einstellung der geforderten technologischen Eigenschaften und ferner auch eine Einstellung des Anteils an Grasfasern in der zweilagigen Papierbahn 10 erfolgen (bei voreingestellten Anteilen an Grasfasern in der Deckschicht 12 und ggf. auch der Tragschicht 11).

Die zweilagige Papierbahn 10 hat vorzugsweise eine Spaltfestigkeit, bestimmt nach dem International-Scott-Bond-Test nach DIN ISO 16260, von 180 bis 300 J/m², insbesondere von 220 bis 300 J/m².

Für die Deckschicht 12 wird vorzugsweise ein Cobb₆₀ Wert nach DIN EN ISO 535 von maximal 40 g/m², insbesondere von weniger als 35 g/m², vorzugsweise weniger als 30 g/m², eingestellt. Dies wird durch eine an sich bekannte Zugabe von Leim und/oder Stärke erhalten.

Um eine bestimmte Optik der Deckschicht 12 zu erhalten, kann z.B. vorgesehen sein, dass die dort eingesetzten Altpapierfasern aus weißem Altpapier gewonnenen Fasern sind. Gerade in einer weißgrundigen Deckschicht lassen sich die grünlichen Grasfasern gut erkennen und werden so von den Betrachtern eines aus dem erfindungsgemäßen Papier hergestellten Endprodukts, das die Deckschicht 12 als Sichtfläche aufweist, gut wahrgenommen.

Es ist aus der vorhergehenden Beschreibung noch einmal ersichtlich geworden, welche Vorteile das erfindungsgemäße Papier und das Verfahren zu dessen Herstellung in sich tragen. Insbesondere ist deutlich geworden, dass zum Einen der Gesamtanteil an Graspapierfasern in einem auf Altpapierfasern basierend hergestellten Papier erhöht und in einer sehr frei gestaltbaren Weise eingestellt werden kann, dass zugleich eine Deckschicht, die später insbesondere als Sichtfläche dienen kann, erhalten werden kann, in der ein besonders hoher Anteil an Grasfasern eingebunden ist, die eine entsprechend den "Graspapiercharakter" des Papiers sehr gut erkennen lassende Optik aufweist.

### Bezugszeichenliste

- 1: Papierbahn
- 2: Papierrolle
- 10: Papierbahn
- 11: Tragschicht
- 12: Deckschicht
- 13: Position
- 14: Papierrolle

## Patentansprüche

1. Papier (10), insbesondere für die Verwendung zur Herstellung von Wellpappe, wobei das Papier (10) aus wenigstens zwei miteinander vergautschten Lagen mit unterschiedlicher Zusammensetzung gebildet ist und wobei das Papier (10) Altpapierfasern und Grasfasern enthält, wobei die Grasfasern Fasern von Süß- und/oder Sauergras und/oder Seegras und/oder Algen sind, **dadurch gekennzeichnet, dass** eine erste Lage des Papiers (10) als Tragschicht (11) ausgebildet ist und einen Mindestanteil an Altpapierfasern von 70 Gew.-% sowie einen maximalen Anteil an Grasfasern von 30 Gew.-% oder keine Grasfasern enthält, dass eine zweite Lage des Papiers (10) eine Deckschicht (12) ausbildet mit einem minimalen Anteil an Grasfasern von 20 Gew.-% und einem maximalen Anteil an Altpapierfasern von 80 Gew.-% und dass der Anteil an Grasfasern in der Deckschicht (12) höher ist als der Anteil an Grasfasern in der Tragschicht (11).

2. Papier (10) nach Anspruch 1, **dadurch gekennzeichnet, dass** der Anteil an Grasfasern in der Deckschicht (12) um wenigstens 5 Gew.-%, insbesondere um wenigstens 10 Gew.-%, besonders bevorzugt um wenigstens 15 Gew.-% höher ist als der Anteil an Grasfasern in der Tragschicht (11).

3. Papier (10) nach einem der vorhergehenden Ansprüche, **dadurch gekennzeichnet, dass** der Anteil an Grasfasern in der Tragschicht (11) maximal 25 Gew.-%, insbesondere maximal 20 Gew.-% beträgt.

4. Papier (10) nach einem der vorhergehenden Ansprüche, **dadurch gekennzeichnet, dass** der Anteil an Grasfasern in der Deckschicht (12) 20 bis 70 Gew.-%, beträgt.

5. Papier (10) nach einem der vorhergehenden Ansprüche, **dadurch gekennzeichnet, dass** der minimale Anteil an Grasfasern in der Deckschicht (12) 25 Gew.-%, insbesondere 30 Gew.-%, vorzugsweise 35 Gew.-%, besonders bevorzugt 40 Gew.-%, beträgt.

6. Papier (10) nach einem der vorhergehenden Ansprüche, **dadurch gekennzeichnet, dass** es keine Frischfasern enthält.

7. Papier (10) nach einem der vorhergehenden Ansprüche, **dadurch gekennzeichnet, dass** die beiden Lagen unterschiedliche Arten von Altpapierfasern enthalten.

8. Papier (10) nach Anspruch 7, **dadurch gekennzeichnet, dass** in der Deckschicht (12) aus weißem Altpapier gewonnene Altpapierfasern enthalten sind und dass in der Tragschicht (12) braune Altpapierfasern enthalten sind.

9. Papier (10) nach einem der vorhergehenden Ansprüche, **dadurch gekennzeichnet, dass** in der Tragschicht (11) Altpapierfasern aus Kraftpapier oder Kraftkarton enthalten sind.

10. Papier (10) nach einem der vorhergehenden Ansprüche, **dadurch gekennzeichnet, dass** es ein Flächengewicht von 80 bis 200 g/m², insbesondere von 125 bis 175 g/m² aufweist.

11. Papier (10) nach einem der vorhergehenden Ansprüche, **dadurch gekennzeichnet, dass** die Tragschicht (11) ein Flächengewicht von 60 bis 170 g/m² aufweist.

12. Papier (10) nach einem der vorhergehenden Ansprüche, **dadurch gekennzeichnet, dass** die Decksicht (12) ein Flächengewicht von 30 bis 50 g/m² aufweist.

13. Papier (10) nach einem der vorhergehenden Ansprüche, **gekennzeichnet durch** eine Spaltfestigkeit bestimmt nach dem International-Scott-Bond-Test nach DIN ISO 16260 von 180 bis 300 J/m², insbesondere von 220 bis 300 J/m².

14. Papier (10) nach einem der vorhergehenden Ansprüche, **gekennzeichnet durch** eine Cobb₆₀ Wert der Deckschicht (12) nach DIN EN ISO 535 von maximal 40 g/m², insbesondere von weniger als 35 g/m², vorzugsweise weniger als 30 g/m².

15. Verfahren zum Herstellen eines Papiers nach einem der vorhergehenden Ansprüche mit folgenden in einer Papiermaschine ausgeführten Schritten:
• bahnförmiges Aufbringen einer ersten Faserstoffzusammensetzung enthaltend Wasser, optional Grasfasern in einem maximalen Anteil von 30 Gew.-% oder weniger, bezogen auf die Trockenmasse, sowie Altpapierfasern ein einem Anteil von mindestens 70 Gew.-% , bezogen auf die Trockenmasse, auf ein erstes Sieb;
• bahnförmiges Aufbringen einer zweiten Faserstoffzusammensetzung enthaltend Wasser, Grasfasern in einem minimalen Anteil von 20 Gew.-%, bezogen auf die Trockenmasse, sowie Altpapierfasern in einem maximalen Anteil von 80 Gew.-%, bezogen auf die Trockenmasse, auf ein zweites Sieb, wobei die zweite Faserstoffzusammensetzung einen höheren Anteil an Grasfasern aufweist als die erste Faserstoffzusammensetzung;
• Vergautschen der auf den Sieben gebildeten Bahnen zu einer wenigstens zweilagigen Papierbahn;
• Trocknen der Papierbahn,
wobei die Grasfasern Fasern von Süß- und/oder Sauergras und/oder Seegras und/oder Algen sind.

## Claims

1. Paper (10), in particular for use in the manufacture of corrugated cardboard, the paper (10) being formed from at least two layers of different composition which are bonded together and the paper (10) containing recycled paper fibres and grass fibres, the grass fibres being fibres of sweet and/or sour grass and/or seaweed and/or algae, **characterised in that** a first layer of the paper (10) is designed as a base layer (11) and contains a minimum proportion of recycled paper fibres of 70% by weight and a maximum proportion of grass fibres of 30% by weight or no grass fibres, **in that** a second layer of the paper (10) forms a top layer (12) with a minimum proportion of grass fibres of% by weight and a maximum proportion of grass fibres of 30 % by weight or no grass fibres, **in that** a second layer of the paper (10) forms a top layer (12) with a minimum proportion of grass fibres of 20 % by weight and a maximum proportion of recycled paper fibres of 80 % by weight, and **in that** the proportion of grass fibres in the top layer (12) is higher than the proportion of grass fibres in the base layer (11).

2. Paper (10) according to claim 1, **characterised in that** the proportion of grass fibres in the top layer (12) is at least 5 % by weight, in particular at least 10 % by weight, particularly preferably at least 15 % by weight, higher than the proportion of grass fibres in the base layer (11).

3. Paper (10) according to one of the preceding claims, **characterised in that** the proportion of grass fibres in the base layer (11) is at most 25% by weight, in particular at most 20% by weight.

4. Paper (10) according to one of the preceding claims, **characterised in that** the proportion of grass fibres in the top layer (12) is 20 to 70% by weight.

5. Paper (10) according to one of the preceding claims, **characterised in that** the minimum proportion of grass fibres in the top layer (12) is 25% by weight, in particular 30% by weight, preferably 35% by weight, particularly preferably 40% by weight.

6. Paper (10) according to one of the preceding claims, **characterised in that** it contains no virgin fibres.

7. Paper (10) according to one of the preceding claims, **characterised in that** the two plies contain different types of recycled paper fibres.

8. Paper (10) according to claim 7, characterised that the top layer (12) contains recycled paper fibres obtained from white recycled paper and that the base layer (12) contains brown recycled paper fibres.

9. Paper (10) according to one of the preceding claims, **characterised in that** the base layer (11) contains recycled paper fibres from kraft paper or kraft board.

10. Paper (10) according to one of the preceding claims, **characterised in that** it has a basis weight of 80 to 200 g/m², in particular of 125 to 175 g/m².

11. Paper (10) according to one of the preceding claims, **characterised in that** the base layer (11) has a basis weight of 60 to 170 g/m².

12. Paper (10) according to one of the preceding claims, **characterised in that** the cover sheet (12) has a basis weight of 30 to 50 g/m².

13. Paper (10) according to one of the preceding claims, **characterised by** a splitting strength determined according to the International Scott Bond Test according to **DIN** ISO 16260 of 180 to 300 J/m², in particular of 220 to 300 J/m².

14. Paper (10) according to one of the preceding claims, **characterised by** a Cobb₆₀ of the top layer (12) according to DIN EN ISO 535 of at most 40 g/m², in particular of less than 35 g/m², preferably less than 30 g/m².

15. A method of manufacturing a paper according to any of the preceding claims, comprising the following steps carried out in a paper machine:
• Web-shaped application of a first pulp composition containing water, optionally grass fibres in a maximum proportion of 30% by weight or less, based on the dry mass, and recycled paper fibres in a proportion of at least 70% by weight, based on the dry mass, to a first wire;
• Web-like application of a second pulp composition containing water, grass fibres in a minimum proportion of 20% by weight, based on the dry mass, and recycled paper fibres in a maximum proportion of 80% by weight, based on the dry mass, to a second wire, the second pulp composition having a higher proportion of grass fibres than the first pulp composition;
• The webs formed on the sieves are smothered to form a paper web with at least two layers;
• Drying the paper web,
wherein the grass fibres are fibres of fresh and/or sour grass and/or seaweed and/or algae.

## Revendications

1. Papier (10), en particulier pour la fabrication de carton ondulé, le papier (10) étant formé d'au moins deux couches de composition différente qui sont collées ensemble et le papier (10) contenant des fibres de vieux papier et des fibres de gazon, les fibres de gazon étant des fibres de foin d'odeur et/ou de gazon amère et/ou d'algues et/ou d'algues, **caractérisé en ce qu'**une première couche du papier (10) est conçue comme une couche de base (11) et contient une proportion minimale de fibres de vieux papier de 70 % en poids et une proportion maximale de fibres de gazon de 30 % en poids ou pas de fibres de gazon, une deuxième couche du papier (10) forme une couche supérieure (12) avec une proportion minimale de fibres de gazon de % en poids et une proportion maximale de fibres de gazon de 30 % en poids ou pas de fibres de gazon, une deuxième couche du papier (10) forme une couche supérieure (12) avec une proportion minimale de fibres de gazon de 20 % en poids et une proportion maximale de fibres de vieux papier de 80 % en poids, et la proportion de fibres de gazon dans la couche supérieure (12) est plus élevée que la proportion de fibres de gazon dans la couche de base (11).

2. Papier (10) selon la revendication 1, **caractérisé par le fait que** la proportion de fibres de graminées dans la couche supérieure (12) est supérieure d'au moins 5 % en poids, en particulier d'au moins 10 % en poids, de préférence d'au moins 15 % en poids, à la proportion de fibres de graminées dans la couche de base (11).

3. Papier (10) selon l'une des revendications précédentes, **caractérisé par le fait que** la proportion de fibres de graminées dans la couche de base (11) est d'au plus 25 % en poids, en particulier d'au plus 20 % en poids.

4. Papier (10) selon l'une des revendications précédentes, **caractérisé par le fait que** la proportion de fibres de gazon dans la couche supérieure (12) est de 20 à 70 % en poids.

5. Papier (10) selon l'une des revendications précédentes, **caractérisé par le fait que** la proportion minimale de fibres de gazon dans la couche supérieure (12) est de 25 % en poids, en particulier de 30 % en poids, de préférence de 35 % en poids, de préférence encore de 40 % en poids.

6. Papier (10) selon l'une des revendications précédentes, **caractérisé par le fait qu'**il ne contient pas de fibres vierges.

7. Papier (10) selon l'une des revendications précédentes, **caractérisé par le fait que** les deux plis contiennent différents types de fibres de vieux papier.

8. Papier (10) selon la revendication 7, **caractérisé par le fait que** la couche supérieure (12) contient des fibres de vieux papiers obtenues à partir de vieux papiers blancs et que la couche de base (12) contient des fibres de vieux papiers bruns.

9. Papier (10) selon l'une des revendications précédentes, **caractérisé par le fait que** la couche de base (11) contient des fibres de vieux papier kraft ou de carton kraft.

10. Papier (10) selon l'une des revendications précédentes, **caractérisé en ce qu'**il a un grammage de 80 à 200 g/m², en particulier de 125 à 175 g/m⁽²⁾.

11. Papier (10) selon l'une des revendications précédentes, **caractérisé par le fait que** la couche de base (11) a un grammage de 60 à 170 g/m⁽²⁾.

12. Papier (10) selon l'une des revendications précédentes, **caractérisé par le fait que** la feuille de couverture (12) a un grammage de 30 à 50 g/m².

13. Papier (10) selon l'une des revendications précédentes, **caractérisé par** une résistance au fendage déterminée selon l'International Scott Bond Test selon DIN ISO 16260 de 180 à 300 J/m², en particulier de 220 à 300 J/m².

14. Papier (10) selon l'une des revendications précédentes, **caractérisé par** un Cobb₆₀de la couche supérieure (12) selon DIN EN ISO 535 d'au plus 40 g/m², en particulier de moins de 35 g/m², de préférence de moins de 30 g/m².

15. Procédé de fabrication d'un papier selon l'une quelconque des revendications précédentes, comprenant les étapes suivantes effectuées dans une machine à papier :
• Application en nappe d'une première composition de pâte contenant de l'eau, éventuellement des fibres de gazon dans une proportion maximale de 30 % en poids ou moins, par rapport à la masse sèche, et des fibres de vieux papier dans une proportion d'au moins 70 % en poids, par rapport à la masse sèche, sur un premier fil ;
• Application d'une seconde composition de pâte contenant de l'eau, des fibres de gazon dans une proportion minimale de 20 % en poids, par rapport à la masse sèche, et des fibres de vieux papier dans une proportion maximale de 80 % en poids, par rapport à la masse sèche, sur un second fil, la seconde composition de pâte ayant une proportion plus élevée de fibres de gazon que la première composition de pâte ;
• Les bandes formées sur les tamis sont étouffées pour former une bande de papier comportant au moins deux couches ;
• Séchage de la bande de papier,
dans lequel les fibres de gazon sont des fibres de gazon fraîche et/ou acide et/ou d'algues marines et/ou d'algues.
